# EUROPEAN PATENT APPLICATION

(11) **EP 4 528 284 A1**
(43) Date of publication of application: **26.03.2025**
(21) Application number: 24196570.6
(22) Date of filing: 27.08.2024
(51) Int. Cl.: G01N 35/00, G01N 35/10

(54) **PIPETTE TIP POSITIONING WITH GUIDING FRAME**

(30) Priority: 20.09.2023 EP 23198536
(71) Applicant: Tecan Trading AG, 8708 Männedorf (CH)
(72) Inventor: FREI, Luca, 8634 Hombrechtikon (CH); SCHINZEL, Fred, 8708 Männedorf (CH); ERB, Dominic, 8400 Winterthur (CH); OTT, Philipp, 8496 Steg (CH)
(74) Representative: Sykora & König Patentanwälte PartG mbB

(57) **Abstract**

A guiding frame (28) for a laboratory automation device (10) comprises: a bottom side (38) for placing the guiding frame (28) on a component (24) of the laboratory automation device (10); a top side (36) with a position detection area (46); and an opening (52) for accessing a port (60) of the component (24), which opening is arranged besides the position detection area (46). The position detection area (46) has two recesses (48), each recess (48) having two straight edges (50), which from a view direction onto the top side are arranged inclined with respect to each other. The bottom side (38) comprises alignment means (54, 56) for aligning the guiding frame (28) with respect to the component (24), the alignment means (56) comprising a base surface (56a) for contacting a top surface of the component (24) and/or guiding surfaces (56b) for contacting walls of the component (24).

## Description

### FIELD OF THE INVENTION

The invention relates to a guiding frame and a guiding system for a laboratory automation device as well as to the laboratory automation device. The invention further relates to a method and computer program for pipetting liquid with the laboratory automation device.

### BACKGROUND OF THE INVENTION

Laboratory automation devices are used for automating laboratory processes, such as pipetting liquids between samples, liquid containers and wells as well as analyzing liquids. Usually, a laboratory automation device comprises a workbench, onto which the samples, liquid containers and wells are placed and a pipetting arm for carrying and automatically moving a pipette, which is used to perform the pipetting processes.

Laboratory automation devices may comprise removable components, which may be placed in receptacles of the workbench. Such a removable component may be slightly misaligned due to tolerances and it may become difficult to align the tip orifice of the pipette with a port of the component. Furthermore, due to a coaxial error of the pipette, the position of the tip orifice may vary. These uncertainties may result in the tip orifice failing to access the port of the component.

EP 3 452 833 A1 describes a method for determining the position of a pipetting arm with the aid of triangular recesses on a microplate. The position of the recesses is determined by detecting a changing capacitance between the pipette tip and the triangular recesses.

US 5 270 210 describes a capacitive sensing system and wash/alignment station for a chemical analyzer.

US 2015/000386 A1 describes an automatic sample pouring device with a rack having reference portions, which are detected by contact measurements.

EP 3 822 641 A1 describes a method for detecting objects in a laboratory environment. A reference feature on an objected may be detected via capacitive measurements.

WO 2022/040598 A1 describes systems and methods for framing workspaces of robotic fluid handling systems. For example, landmarks on a bulk reservoir holder 300 or labware holder 302 may be determined with impedance measurements.

US 2016/018430 A1 describes an apparatus and a method for determining the position of an automatically displaceable gauge with a a sensor for identifying an abutment.

US 2007/065945 A1 describes a method and apparatus for positioning a pipetting device.

### DESCRIPTION OF THE INVENTION

It is an object of the invention to improve the alignment of a pipette tip with a port of a removable component of a laboratory automation device. A further object is to reduce errors in pipetting liquid into a port of a removable component of a laboratory automation device.

These objectives are achieved by the subject-matter of the independent claims. Further exemplary embodiments are evident from the dependent claims and the following description.

A first aspect of the invention relates to a guiding frame for a laboratory automation device. A laboratory automation device is a device designed for automating assay procedures. In particular, a laboratory automation device comprises a pipette automatically movable by a pipetting arm of the laboratory automation device, which is adapted for aspirating and dispensing liquid with the pipette. The laboratory automation device comprises a controller for controlling the pipetting arm and other actuators.

According to an embodiment, the guiding frame comprises a bottom side for placing the guiding frame on a component of the laboratory automation device, a top side with a position detection area, for example on a side wall and/or a strut of the guiding frame, and an opening for accessing a port of the component, which opening is arranged besides the position detection area and/or the strut. The guiding frame is designed to be put onto the top of a component of the laboratory automation device, which has a port to be supplied with liquid. Such a component may be a removable component of the laboratory automation device and during installation, misalignment with respect to its receptacle may occur. The guiding frame aligns itself with respect to the component by its bottom side and provides means for determining its position on the top side.

The position detection area is for detecting a reference position in the position detection area, for example based on capacity measurements. The reference position may be a reference position of the guiding frame, which is aligned with respect to the component and its port. The reference position is therefore also a reference position for the port.

According to an embodiment, the position detection area has two recesses, which may be arranged in in a planar upper face of the top side. Each recess has two straight edges, which straight lines are arranged inclined with respect to each other, when viewed from a view direction onto the top side. Each recess may have a bottom and side walls. A straight edge may be the edge between a side wall and the upper surface. A recess may be an indentation in the planar upper face, which is bordered at least at two sides by the straight edges. The edges may be orthogonal to the upper face. However, also inclinations are possible. When viewed from a view direction onto the top side, the two straight edges of a recess are inclined, which means that they are not parallel and/or that lines extending the straight edges intersect each other. The recesses may be arranged besides each other and/or may have the same shape and/or may be symmetric. The recesses may be through-holes.

The position detection area may be made of an electrically conducting material, such as metal or an electrically conducting plastics material. In such a way, a capacity is measurable between the pipette tip and the position detection area. The edges are straight, such that their positions and orientations are easily determinable with a low number of measurement points, where the capacity between the pipette tip and the position detection area changes.

The position of the guiding frame and in particular the reference position on the guiding frame may be determined capacitively, i.e. based on capacity measurements. In such a way, there is no need for touching the guiding frame with the pipette. The pipette and in particular its pipette tip are lowered onto the position detection area, which position is roughly known. The pipette and the position detection area are electrically conducting and the laboratory is adapted for determining a capacity between the pipette tip and the position detection area. When a specific capacity is reached, the position of the position detection area in z-direction (orthogonal to the planar upper surface of the position detection area and/or the guiding frame) is determined. The pipette tip is moved above the recesses, and from the decreasing and increasing capacity, the position of the straight edges on the path of the pipette tip is determined. From these intersection points it is possible to calculate the reference position, since the relative position and orientation of the straight edges is known. All these calculations and/or measurements may be automatically performed by the controller of the laboratory automation device.

The bottom side is formed to be placed on a top side of the component and/or comprises alignment means for aligning the guiding frame with respect to the component. The alignment means are designed for aligning the guiding frame on their own.

The alignment means may comprise a base surface for contacting a top surface of the component. The base surface may be in parallel to the upper surface of the guiding frame. The alignment means may comprise a guiding surfaces for contacting walls of the component, for example orthogonal to the upper surface and/or the base surface. In such a way, the guiding frame can be automatically lowered onto the component with a gripper device of the laboratory automation device, which during lowering solely has to perform a movement in z-direction.

At least some of the guiding surfaces may face outwards with respect to the guiding frame, for example away from the opening. At least some of the guiding surfaces may face inwards with respect to the guiding frame, for example towards the opening.

With the guiding frame, exact positioning of the pipetting tip with respect to the component is possible. In particular, small inlet ports and/or outlet ports of the component are accessible, which would be otherwise not accessible because of mechanical tolerances of the pipetting arm and of tolerances in axiality of the pipette.

According to an embodiment, the alignment means comprise permanent magnets and/or a magnetic material. These permanent magnets and/or magnetic material may align with magnetic spots of a top of the component, when the guiding frame is placed on top of the component with the port. It may be that the bottom side of the guiding frame has a planar contact surface, which contacts a planar upper surface of the component. The permanent magnets and/or magnetic material then move the guiding frame into the correct relative position with respect to the component. In such a way tolerances between the guiding surfaces and the component may be compensated.

The permanent magnets and/or the magnetic material may be provided in the form of magnetic spots. The magnetic spots may be adapted for attracting corresponding magnetic spots of the component, which may comprise permanent magnets and/or magnetic material.

It may be that a distance between two magnetic spots of the guiding frame is different from a distance of two corresponding magnetic spots of the component. This causes a force moving the guiding frame towards a middle position between the magnetic spots, when it has been moved away from the middle position.

It also may be that a distance between two magnetic spots of the guiding frame is equal to a distance of two corresponding magnetic spots of the component.

A distance of one of the magnetic spots of the guiding frame to an alignment means of the guiding frame may be different from a distance of a magnetic spot of the component to a corresponding alignment means of the component. This may cause a force pressing the alignment means of the guiding frame, such as a guiding surface and/or wall of the guiding frame, towards the corresponding alignment means of the component, such as a wall of the component.

According to an embodiment, the alignment means comprise a geometric shape of the bottom side, which shape is designed to align the guiding frame with respect to the component, when the guiding frame is placed onto the component. The geometric shape may be designed to fit onto the top of the component, which top may be complementary formed with respect to the geometric shape of the guiding frame. Such geometric features may include the guiding surfaces and optionally pins, pin holes, etc.

According to an embodiment, the base surface of the alignment means is in parallel to an upper surface of the top side of the guiding frame, in which upper surface the two recesses of the position detection area are provided. The guiding frame may be place onto a top surface of the component, such that the base surface and the upper surface of the guiding frame are in parallel to the top surface of the component.According to an embodiment, each of the two recesses of the position detection area has an outer straight edge and an inner straight edge, which is arranged between the outer straight edge and a middle area between the two recesses. The outer straight edge and the inner straight edge are inclined with respect to each other. The recess may have the shape of a triangle, where the two straight edges define two sides of the triangle. The recess may have the shape of a quadangle, where the two straight edges define two opposite sides of the quadangle.

According to an embodiment, the outer straight edges of the two recesses are parallel and the inner straight edges of the recesses are parallel. In such a way, it is possible to determine the position of the reference position with a single move of the pipette tip along the recesses, this will be described below in more detail.

According to an embodiment, the position detection area is arranged on a strut interconnecting two walls of the guiding frame. The guiding frame may have a substantially rectangular form with a side wall on two more sides. The side walls may be provided by struts and/or may be interconnected by struts. The recesses of the position detection area may be provided on one of the struts. It may be that the position detection area is arranged on a side wall of the guiding frame. The recesses of the position detection area may be provided on one of the side walls.

According to an embodiment, the strut with the position detection area is arranged besides the opening for accessing the port of the component. The opening may be bordered by side walls and/or struts of the guiding frame. After moving the pipette along the position detection area and determining the reference position, the pipette may be directly moved into the opening and over the port of the component.

According to an embodiment, the guiding frame is formed one-piece and/or is from an electric conducting material. The guiding frame may be machined in one-piece and/or may be a rigid body. The capacity measurements at best are performed with an electric conducting material.

According to an embodiment, the recesses and/or the straight edges are arranged for detecting a reference position between the recesses with capacity measurements of a pipette top moved above the recesses. This may be achieved by making at least the edges, the recesses or the whole guiding frame from an electrically conducting material. The reference position may be a fixed point defined relative to the position detection area and in particular the straight edges.

A further aspect of the invention relates to a guiding system for a laboratory automation device, wherein the guiding system is composed of the guiding frame such as described herein and the component of the laboratory automation device, which provides the port. The bottom side of the guiding frame may be adapted to the top side of the component. In particular, the bottom side of the guiding frame may geometrically fit to the top side of the component. There may be permanent magnets in the bottom side of the guiding frame, which fit to magnetic spots on the top side of the component.

According to an embodiment, the guiding frame is detachably mountable to a top of the component. The guiding frame solely may be plugged onto the component and/or solely may stick to the component by magnetic forces.

According to an embodiment, the port of the component has a diameter of less than 2 mm. With the positioning process of the pipette tip such as described herein, even such small ports may be hit.

According to an embodiment, the component is a microfluidic device for processing a liquid. Such a microfluidic device may have channels with a diameter smaller than 100 µm and/or therefore also small ports. Microfluidic devices may be designed for DNA analysis, spectrographic analysis, etc.

According to an embodiment, the component is a microplate (also called microtiter plate) with a plurality of wells with a diameter of less than 2 mm. In this case, the port is an opening of a well. As a further example, the guiding frame may be used for calibrating microplates with a plurality of small wells, such as 384, 1536 or 3456 wells.

According to an embodiment, the component is a target plate and in particular a MALDI-MS Target Plate (Matrix-Assisted Laser Desorption/lonization - Mass Spectroscopy) with a plurality of target positions. The target positions may have diameters of less than 2.8 mm. In this case, the port may be a circular target position. The more precisely a sample and/or matrix material is placed in the centre, the faster the sample can be processed (laser irradiates the sample, triggering ablation and desorption of the sample and matrix material in the mass spectrometer).

In general, the component may have two or more ports. After the reference position has been determined, the positions of all ports can be determined relative to the reference position.

A further aspect of the invention relates to a laboratory automation device, comprising a workbench, a pipetting arm with a pipette for moving the pipette, and a guiding frame and a component, which form a guiding system as described herein.

According to an embodiment, the workbench comprises a receptacle for receiving the component. The component with the port may be a removable component. The receptacle may be an opening in the workbench.

According to an embodiment, the laboratory automation device is adapted for detecting the straight edges of the recesses based on capacity measurements by moving a pipette tip of the pipette over the recesses, for determining the reference position from the detected straight edges and the position of the port from the reference position. The laboratory automation device further may comprise a controller for controlling the pipetting arm and for performing capacity measurements with the pipette tip and/or for performing these method steps.

According to an embodiment, the laboratory automation device further comprises a gripper device for automatically picking the guiding frame and for placing the guiding frame on the component. The gripper device may comprise two paddle grippers, which have been fetched by two pipetting channels. The gripper device may be a dedicated robotic gripper arm with fixed or exchangeable gripper fingers. The controller also may be adapted for controlling the gripper device and for performing this method step.

A further aspect of the invention relates to a method for determining the position of a port with the laboratory automation device. The method may be performed automatically by the controller of the laboratory automation device.

According to an embodiment, the method comprises: moving the pipette tip in a line over the position detection area. This may be done automatically with the pipetting arm, which is controlled accordingly. The approximate position of the component and/or the guiding frame may be known to the controller. Based on this approximate position, the pipette tip may be moved to a starting point above the position detection area, then lowered, until the surface of the position detection area is detected. In this height, the pipette tip then may be moved to an ending point, where the edges of the recesses are detected based on the changing capacitance.

According to an embodiment, the method comprises: determining a changing capacitance between the pipette tip and an electrically conducting material of the position detection area. During the movement, the capacitance changes, when the pipette tip passes an edge of a recess. This changing capacitance may be recorded by the controller.

According to an embodiment, the method comprises: determining positions of the straight edges of the recesses and lengths between the positions from the changing capacitance. The positions, where the capacitance changes, can be assumed to be the points, where the pipette tip passes the edges of the recesses.

According to an embodiment, the method comprises: determining a reference position of the guiding frame from the lengths and a position of the port of the component. For each recess, a distance is determined between the points, where the pipette passes the edges of the recess. The reference position can be a symmetry point to which the two recesses are point symmetric. The position of the symmetry point can be determined from the difference and the ratio of the distances of the recesses. The position of the port of the component then can be determined from the reference position, since the relative position of the port to the reference position is known from the geometry of the guiding frame. The corresponding difference vector may be stored in the controller.

A further aspect of the invention relates to a method for pipetting liquid with the laboratory automation device. According to an embodiment, the method comprises determining the position of the port as described herein, moving the pipette tip to the position and dispensing liquid into the port and/or aspirating liquid from the port. After the reference position has been determined, the pipette also may be moved to other ports and liquid may be aspirated and/or dispensed there.

According to an embodiment, the method further comprises: placing the guiding frame on the component. This may be done automatically, with the gripper device. The gripper device may be controlled by the controller accordingly.

According to an embodiment, the method further comprises: placing the guiding frame manually on the component. The component-guiding frame assembly may be placed to the workbench by a person.

A further aspect of the invention relates to a computer program for determining the position of a port and/or for pipetting liquid, which, when being executed by a processor, is adapted to carry out the steps of the method as described herein. The computer program may be performed by the controller. A further aspect of the invention relates to a computer-readable medium, in which such a computer program is stored. A computer-readable medium may be a hard disk, an USB (Universal Serial Bus) storage device, a RAM (Random Access Memory), a ROM (Read Only Memory), an EPROM (Erasable Programmable Read Only Memory) or a FLASH memory. A computer-readable medium may also be a data communication network, e.g. the Internet, which allows downloading a program code. In general, the computer-readable medium may be a non-transitory or transitory medium.

It has to be understood that features of the method, the computer program and the computer-readable medium as described herein may be features of the laboratory automation device as described herein, and vice versa.

These and other aspects of the invention will be apparent from and elucidated with reference to the embodiments described hereinafter.

### BRIEF DESCRIPTION OF THE DRAWINGS

Below, embodiments of the present invention are described in more detail with reference to the attached drawings.
Fig. 1 schematically shows a laboratory automation device according to an embodiment of the invention.
Fig. 2a and 2b show a perspective view of a guiding frame according to an embodiment of the invention.
Fig. 3 schematically shows a cross-sectional view through a guiding system according to an embodiment of the invention.
Fig. 4 schematically shows a cross-sectional view through a guiding system according to a further embodiment of the invention.
Fig. 5 shows a flow diagram for determining the position of a port of a component of a laboratory automation device and for pipetting liquid with the laboratory automation device according to an embodiment of the invention.
Fig. 6 schematically shows a top view onto a guiding system according to an embodiment of the invention.
Fig. 7 shows a perspective view of a guiding frame according to a further embodiment of the invention.
Fig. 8 shows a perspective view of the guiding frame of Fig. 7 on a micro plate.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

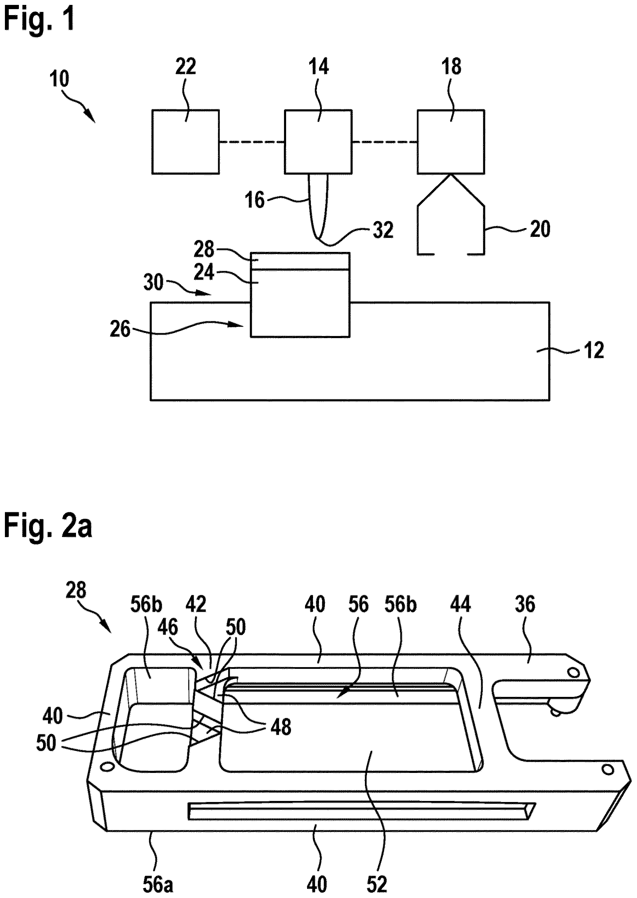

Fig. 1 shows a laboratory automation device 10, which comprises a workbench 12, a pipetting arm 14 with a pipette 16, a gripper device 18 with a gripper 20 and a controller 22 for controlling the pipetting arm 14 and the gripper device 18. The workbench 12 is adapted for carrying components, such as sample containers, test tubes, microplates, etc. Fig. 1 shows a special removable component 24, which is placeable into a receptacle 26 of the workbench 12. For example, this may be done manually or with the gripper device 18. The component 24 may be a microfluidic device for processing a liquid or a MALDI-MS target plate or a microplate with a plurality of wells.

Fig. 1 also schematically shows a guiding frame 28 on the component 24. The guiding frame 28 is also removable and may be placed on the component 24, for example manually or with the gripper device 18. The guiding frame 28 and the component 24 may be seen together as a guiding system 30.

The laboratory automation device 10 and in particular the controller 22 is also adapted for capacitively determining a distance of the pipette tip 32 of the pipette 16 to an electric conductive surface below. For achieving this, the pipette 16 may be made of an electrically conducting material.

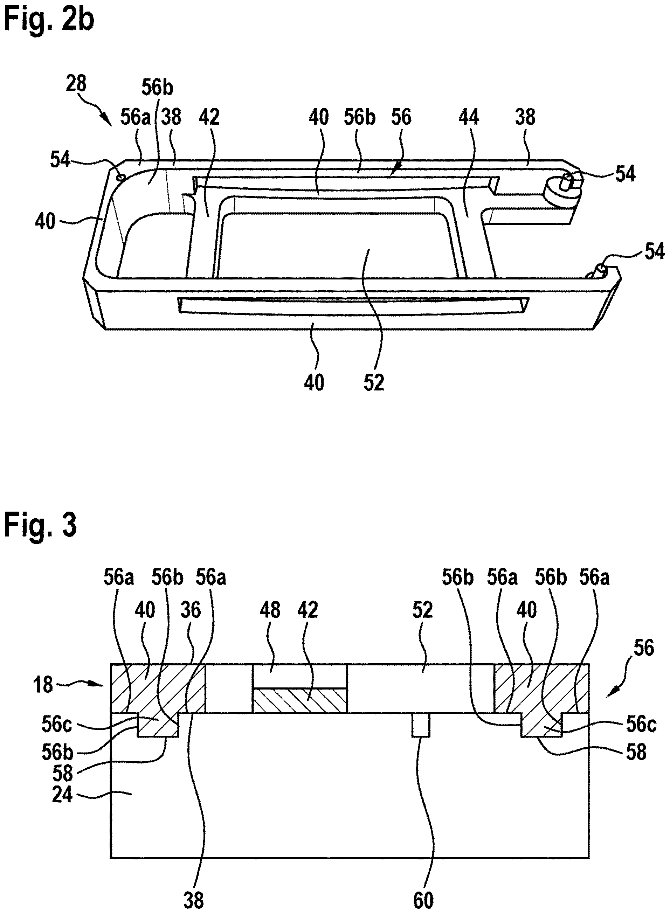

Fig. 2a and 2b show an embodiment of a guiding frame 28 in more detail. Fig. 2a is a view onto a top side 36 of the guiding frame 28 and Fig. 2b a view onto a bottom side 38. The guiding frame 28 is composed of three rectangular arranged side walls 40, which are interconnected by struts 42, 44 on the top side 36. The guiding frame 28 and in particular the side walls 40 and the struts 42, 44 may be formed one-piece from an electric conducting material.

In the top side of the strut 42, a position detection area 46 is provided, which comprises two recesses 48, which are provided in a planar upper face of the top side 36. The recesses 48 also may be provided on one of the side walls 40. The recesses 48 have a substantially triangular or trapezoid shape and are used for determining a reference position on the guiding frame 28 with capacitance measurements performed by the controller 22. To this end, the recesses 48 have straight edges 50. The straight edges 50 are on top of walls, which run substantially orthogonal to the planar upper face.

Between the sidewalls 40 and the struts 42, 44, the guiding frame 28 comprises an opening 52 for accessing the component 24 below.

The bottom side 38 is designed and/or adapted for self-positioning and/or self-aligning the guiding frame on the component 24. This may be done with alignment means, such as geometric features and/or magnets and/or magnetic material 54, such as shown in Fig. 2b.

The alignment means 56 comprising a base surface 56a for contacting a top surface of the component and guiding surfaces 56b orthogonal to the base surface 56a for contacting walls of the component 24. The base surface 56a is in parallel to the upper surface of the top side 36 of the guiding frame, in which upper surface the two recesses of the position detection area are provided.

Fig. 3 shows a guiding system 30 with a guiding frame 28 and a component 24, with the guiding frame 28 having a geometric shape of the bottom side 38 as alignment means. Here, pins 56c at the bottom side 38 engage into holes 58 in the top side of the component 24. The base surface 56a may be provided around the pins 56c, which provide the guiding surfaces 56b as side surfaces.

It also is possible that the guiding frame 28 is positioned over a rounded edge of the component 24. A further possibility is that the guiding frame 28 snaps over a nose of the component 24 and/or is clipped onto the component 24.

The opening 52 is arranged, such that a port 60 of the component can be accessed with the pipette 16. For example, the port 60 of the component 24 has a diameter of less than 2 mm. When the pins 56 are inserted into the holes 58, the guiding frame 28 aligns itself with the component 24 and the guiding frame 28 is precisely positioned relative to the port 60.

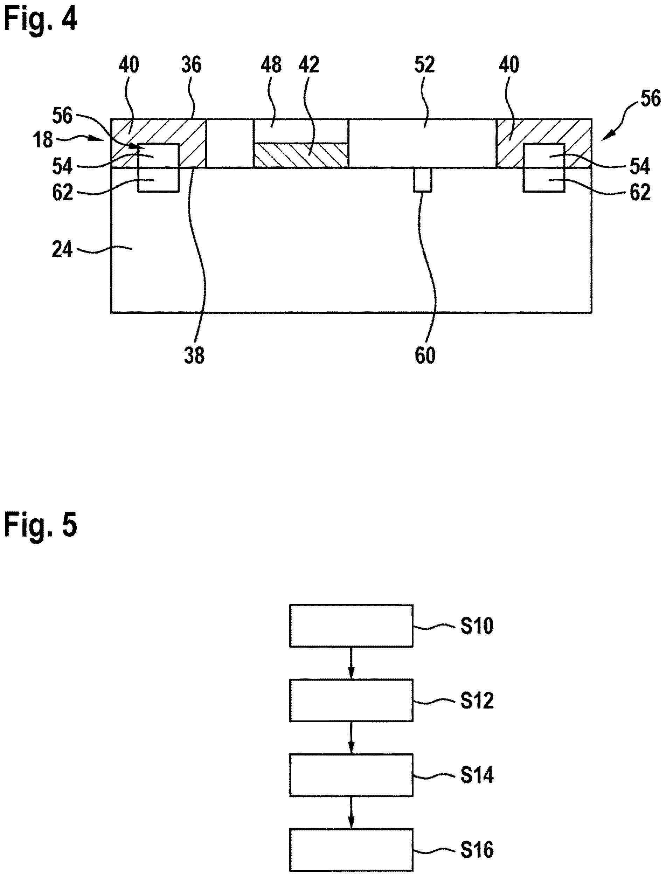

Fig. 4 shows a guiding system 30 with a guiding frame 28 and a component 24, wherein the guiding frame 28 has magnets and/or a magnetic material 54 at the bottom side 38, which align with magnetic spots 62 on the component 24. The embodiment of Fig. 4 may be combined with the embodiment of Fig. 3. The magnets and/or magnetic material 54 may be provided as magnetic spots, which attract and/or are attracted by the magnetic spots 62 of the component 24.

It may be that the distance between two magnetic spots 54 of the guiding frame 18 is different from the distance of two corresponding magnetic spots 62 of the component 24. This causes a force moving the guiding frame 28 towards a middle position between the magnetic spots 54, when it has been moved away from the middle position.

Such as shown, it also may be that a distance between two magnetic spots 54 of the guiding frame 18 is equal to a distance of two corresponding magnetic spots 62 of the component 24.

A distance of one of the magnetic spots 54 of the guiding frame to a mechanical alignment means 56 of the guiding frame 18 may be different from a distance of a magnetic spot 62 of the component 24 to a corresponding mechanical alignment means of the component 24. This may cause a force pressing the alignment means 56 of the guiding frame 18, such as a guiding surface 56b and/or wall of the guiding frame 18, towards the corresponding alignment means of the component 24, such as a wall of the component 24.

The guiding frame 28 and the component 24 have planar contact surfaces. When the guiding frame 28 is placed on the component 24, the guiding frame 28 aligns itself with the component 24 by the magnets and/or magnetic material 54, which are attracted by a magnetic force, and the guiding frame 28 is precisely positioned relative to the port 60.

Fig. 5 shows a flow diagram for determining the position of a port 60 of a component 24 of a laboratory automation device 10 and for pipetting liquid with the laboratory automation device 10. The method may be automatically performed by the controller 22.

In optional step S10, the guiding frame 28 is placed on the component 24. This may be done manually or automatically with the gripper device 18, which for example may have paddle grippers 20. The guiding frame 28 may be placed snugly onto the component 24 for minimizing tolerances between them. It may be placed manually or by using a robotic gripper.

After the placing, the guiding frame 28 self-aligns with respect to the component. This may be achieved by alignment means, such as permanent magnets and/or magnetic material 54 and/or geometric features, such as a geometric shape 56 of the bottom side 38. This reduces a misalignment of the guiding frame 28 and the port 60.

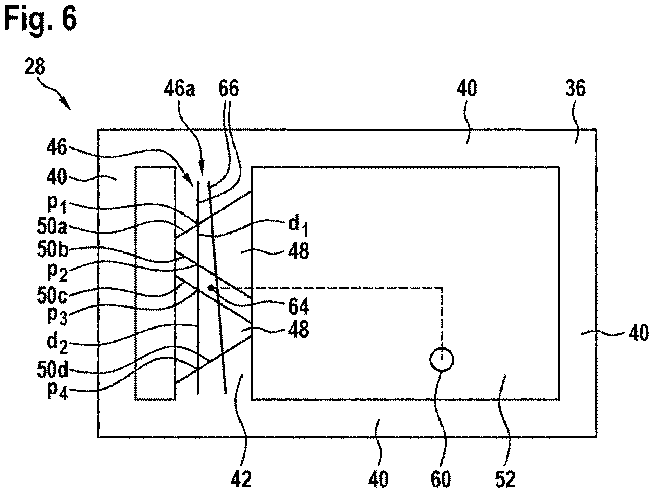

In step S12, the pipette tip 32 is moved into a starting area 46a within the position detection area 46, such as shown in Fig. 6. There, the pipetting tip 32 is lowered onto the upper surface of the position detection area 46 until a desired distance in z-direction is reached. This distance may be determined by capacitance measurements via the pipette tip 32. The controller 22 detects the upper surface touchless by monitoring the capacitance. Alternatively, the pipette tip 32 is lowered to a predetermined position close enough to the surface for sensing capacitance.

After that, the pipette tip 32 is moved in a line and/or straight path 66 over the position detection area 46, such that it passes the two recesses 48. Fig. 6 shows two example paths 66 that may be followed by the pipette tip 32 during this movement. During the movement, a changing capacitance at the edge 50 between the pipette tip 32 and an electrically conducting material of the position detection area 46 is measured. The controller performs a capacitive scan close to the upper surface across the recesses 48. The height in z-direction of the pipette tip 32 needs not to change.

In step S14, positions p₁, p₂, p₃, p₄ of the straight edges 50 of the recesses 48 are determined from the measured capacitances along the path 66. This may be done by detecting steep changes in the capacitance signal.

From the positions p₁, p₂, p₃, p₄, lengths d₁, d₂ are determined, which are distances between these positions.

In Fig. 6, each recess 48 has an outer straight edge 50a, 50d and an inner straight edge 50b, 50c, which is arranged between the outer straight edge 50a, 50d and a middle area between the two recesses 48. The outer straight edges 50a, 50d are parallel and the inner straight edges are parallel 50b, 50c. Due to these geometric properties, a reference position 64, for example in the middle area, can be determined from a difference of the lengths d₁, d₂ and their ratio. However, also other arrangements of edges 50a, 50b, 50c, 50d are possible. In these cases, it may be necessary to determine more than two lengths to determine the reference position 64.

In step S16, the position of the port 60 of the component 24 is determined from the reference position 64. An offset from reference position 64 to the position of the port 60 may be stored in the controller with respect to the x-, y- and z-direction.

After that, the pipette tip 32 is moved to the position of the port 60 and liquid is dispensed into the port 60. Since the reference position 64 was determined with the same pipette 16 and since the guiding frame 28 self-aligned with the component 24, the tip error and the variation of the component 24 with respect to the workbench 12 are compensated and also a small port 60 is hit with high reliability.

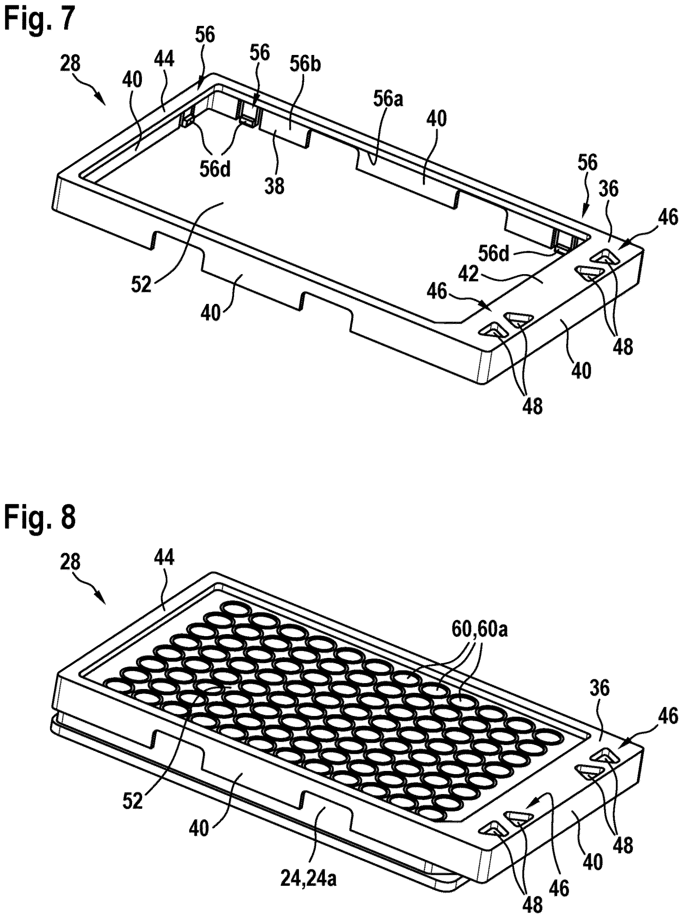

Fig. 7 shows a perspective view of a further embodiment of a guiding frame 28. The guiding frame 28 is composed of four rectangular arranged side walls 40. The side walls are stabilized with struts 42, 44 which run in a plane orthogonal to the side walls. The guiding frame 28 and in particular the side walls 40 and the struts 42, 44 may be formed one-piece from an electric conducting material. The guiding frame 28 comprises an opening 52 for accessing the component 24 below, which is enclosed by the walls 40.

Two position detection areas 46 are provided in strut 44, each of which is composed of two recesses 48, which are provided in a planar upper face of the top side 36 of the guiding frame 28. The recesses 48, which are though-holes through the strut 44, have a substantially triangular or trapezoid shape and are used for determining the reference position such as described above.

The bottom side 38 is designed and/or adapted for self-positioning and/or self-aligning the guiding frame 28 on a component 24. In the present case this done with alignment means 56, which comprise a base surface 56a for contacting a top surface of the component 24, a guiding surfaces 56b of the walls 40 for contacting walls of the component 24 and with clamping elements 56d for minimizing a tolerance between the guiding frame 28 and the component 24. The base surface is provided opposite to an upper face of the top side 36 of the struts 42, 22. The clamping elements 56d may be provided on opposite and/or neighboring walls 40 of the guiding frame 28.

Fig. 8 shows a perspective view of the guiding frame of Fig. 7, which is positioned on a micro plate 24a as component 24. The micro plate 24a comprises a plurality of wells 60a, which are seen as ports 60 of the micro plate 24a.

The microplate 24a may be a high-density plate, which may comprise more than 1000, such as 1536 wells. In this case, each well may have a rather small diameter and the guiding frame 28 together with the positioning method help to hit a specific well.

A further application may be pipetting organoids. It has been shown that individual cells behave differently than cell groups. This is why three-dimensional cell cultures, i.e. organoids, are grown. The organoids may be cultivated in the wells 60a of the micro-plate 24a in liquid culture media. Growth is observed using an imaging system, e.g. a microplate reader which also has imaging capabilities. The imaging also determines exactly where the organoid is in the well. The well diameter may be 6 mm. The organoid diameter of an organoid may be tenths of a millimeter to one millimeter. From the reader, the position of the organoid within the well 60a may be obtained. On the other hand, the well grid, i.e. the positions of the wells 60a are given in relation to an outer contour of the microplate.

With the guiding frame 28 and the method described above, the pipette tip 32 may be precisely moved to the location of the organoid in the well 60a and the organoid may be carefully sucked into the pipette tip 32 and transferred to another vessel for further experiments.

According to an embodiment, the pipette tip 32 is moved to the port 60 and is further moved to a local position within the port 60 to aspirate and/or dispense the pipette tip 32 at the local position.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: laboratory automation device
- 12: workbench
- 14: pipetting arm
- 16: pipette
- 18: gripper device
- 20: gripper
- 22: controller
- 24: component
- 26: receptacle
- 28: guiding frame
- 30: guiding system
- 32: pipette tip
- 36: top side
- 38: bottom side
- 40: side wall
- 42: strut
- 44: strut
- 46: position detection area
- 48: recess
- 50: straight edge
- 52: opening
- 54: magnet and/or magnetic material
- 56: alignment means
- 56a: base surface
- 56b: guiding surface
- 56c: pin
- 56d: snap click
- 58: hole
- 60: port
- 60a: well
- 62: magnetic spot
- 64: reference position
- 66: moving path
- p₁, p₂, p₃, p₄: position
- d₁, d₂: length

## Claims

1. A guiding frame (28) for a laboratory automation device (10), the guiding frame (28) comprising:
a bottom side (38) for placing the guiding frame (28) on a component (24) of the laboratory automation device (10);
a top side (36) with a position detection area (46) ;
an opening (52) for accessing a port (60) of the component (24), which opening is arranged besides the position detection area (46);
wherein the position detection area (46) has two recesses (48), each recess (48) having two straight edges (50), which from a view direction onto the top side are arranged inclined with respect to each other,
wherein the bottom side (38) comprises alignment means (54, 56) for aligning the guiding frame (28) with respect to the component (24), the alignment means (56) comprising a base surface (56a) for contacting a top surface of the component (24) and guiding surfaces (56b) for contacting walls of the component (24).

2. The guiding frame (28) of claim 1,
wherein the alignment means (56) comprises permanent magnets (54) and/or magnetic material (54).

3. The guiding frame (28) of claim 1 or 2,
wherein the base surface (56a) is in parallel to an upper surface of the top side (36) of the guiding frame (28), in which upper surface the two recesses (48) of the position detection area (46) are provided.

4. The guiding frame (28) of one of the previous claims,
wherein each of the two recesses (48) of the position detection area (46) has an outer straight edge (50a, 50d) and an inner straight edge (50b, 50c), which is arranged between the outer straight edge (50a, 50b) and a middle area between the two recesses (48);
wherein the outer straight edges (50a, 50d) are parallel and the inner straight edges are parallel (50a, 50b).

5. The guiding frame (28) of one of the previous claims,
wherein the positioning area (46) is arranged on a strut (42) interconnecting two walls (40) of the guiding frame (28);
wherein the opening (52) for accessing the port (60) of the component (24) is arranged between the walls (40) and besides the strut (42).

6. The guiding frame (28) of one of the previous claims,
wherein the guiding frame (28) is formed one-piece from an electric conducting material.

7. The guiding frame (28) of one of the previous claims,
wherein the recesses (48) and/or the straight edges (50) are arranged for detecting a reference position (64) between the recesses (48) with capacity measurements of a pipette top (32) moved above the recesses (48).

8. A guiding system (30) for a laboratory automation device (10), the guiding system (30) comprising:
a guiding frame (28) according to one of the previous claims,
a component (24) of the laboratory automation device (10),
wherein the guiding frame (28) is detachably mountable to a top of the component (24).

9. The guiding system (30) of claim 8,
wherein the port (60) of the component (24) has a diameter of less than 2 mm.

10. The guiding system (30) of claim 8 or 9,
wherein the component (24) is one of:
a microfluidic device for processing a liquid;
a microplate (24a) with a plurality of wells;
a target plate with a plurality of target areas.

11. A laboratory automation device (10), comprising:
a workbench (12);
a guiding frame (28) and a component (24), which form a guiding system (30) according to one of claims 8 to 10;
a pipetting arm (14) with a pipette (16) for moving the pipette (16); wherein the workbench (12) comprises a receptacle (26) for receiving the component (24);
wherein the laboratory automation device (10) is adapted for:
detecting the straight edges (50) of the recesses (48) based on capacity measurements by moving a pipette tip (32) of the pipette (16) over the recesses (48);
determining a reference position (64) of the guiding frame (28) from the detected straight edges (50) and a position of the port (60) from the reference position (64); and
moving the pipette tip (32) to the position of the port (60) and dispensing liquid into the port (60) and/or aspirating liquid from the port (60).

12. The laboratory automation device (10) of claim 10, further comprising:
a gripper device (18) for automatically picking the guiding frame (28) and for placing the guiding frame (28) on the component (24).

13. A method for pipetting liquid with a laboratory automation device (10) of claim 11 or 12, the method comprising:
moving the pipette tip (32) in a line over the position detection area (46) and determining a changing capacitance between the pipette tip (32) and an electrically conducting material of the position detection area (46);
determining positions (p₁, p₂, p₃, p₄) of the straight edges (50) of the recesses (48) and lengths (d₁, d₂) between the positions from the changing capacitance;
determining a reference position of the guiding frame (28) from the lengths and a position of the port (60) of the component (24) from the reference position (64);
moving the pipette tip (32) to the position of the port (60) and dispensing liquid into the port (60) and/or aspirating liquid from the port (60).

14. A method for pipetting liquid with a laboratory automation device (10) of claim 11 or 12, the method comprising:
determining the position of the port (60) according to claim 12;
moving the pipette tip (32) to the position and dispensing liquid into the port (60) and/or aspirating liquid from the port.

15. A computer program for controlling the laboratory automation device (10) of claim 11 or 12, which, when being executed by a processor, is adapted to carry out the steps of the method of claim 13 or 14.
